# EUROPEAN PATENT APPLICATION

(11) **EP 4 442 548 A1**
(43) Date of publication of application: **09.10.2024**
(21) Application number: 22900977.4
(22) Date of filing: 26.10.2022
(51) Int. Cl.: B62J 27/20

(54) **VEHICLE AIRBAG DEVICE**

(30) Priority: 30.11.2021 JP 2021194213
(71) Applicant: Autoliv Development AB, 44783 Vargarda (SE)
(72) Inventor: MURAKAMI, Sho, Yokohama-shi, Kanagawa 222-8580 (JP); SHIMONO, Hiroyoshi, Yokohama-shi, Kanagawa 222-8580 (JP); FUMA, Makoto, Yokohama-shi, Kanagawa 222-8580 (JP)
(74) Representative: Schön, Thilo
(86) International application number: PCT/JP2022/039934
(87) International publication number: WO 2023/100544

(57) **Abstract**

PROBLEM

To provide a vehicle airbag device enabling a reduction in injury values of an occupant using a simple configuration.

RESOLUTION MEANS

A vehicle airbag device 100 is provided on a vehicle 102 having a handlebar 104 in front of a driver seat, and includes an airbag cushion 112 installed below the handlebar 104. The airbag cushion 112 includes:
a main expansion part 120 that expands and deploys between a center part of the handlebar 104 below a head 132 of an occupant 106 gripping the handlebar 104 in a regular orientation and a torso of the occupant 106, and
a front expansion part 122 that expands and deploys forward from an upper front side of the main expansion part 120, reaching at least roughly above the handlebar 104.

## Description

### TECHNICAL FIELD

The present invention relates to a vehicle airbag device provided on a vehicle having a handle in front of a driver seat.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure.

Airbag devices are being implemented on vehicles with a handlebar or separate handles such as a motorcycle in addition to vehicles with a circular steering wheel such as a regular car. For example, FIG. 1 of Patent Document 1 discloses an airbag device 111 applied a motorcycle 100. The airbag device 111 is installed below the handlebar and enables broadly restraining an occupant 101 attempting to move in a motion direction 191 during a frontal collision using an airbag 121.

### RELATED ART DOCUMENTS

### Patent Documents

Patent Document 1: Japanese Unexamined Patent Application Publication 2006-312426

### SUMMARY OF THE INVENTION

### PROBLEM TO BE SOLVED BY THE INVENTION

In addition to reduction in injury values of an occupant, there is demand for a simple configuration for airbag devices from the perspective of securing an installation location as well as cost. However, for the technology in Patent Document 1, the front side of the airbag 121 is not supported so achieving means for reducing injury values of an occupant entering from the rear is difficult. In addition, the airbag 121 has a relatively large value that expands above the head of the occupant, leaving room for simplification.

In light of these problems, an object of the present invention is to provide a vehicle airbag device that enables reducing injury values of the occupant with a simple configuration.

### MEANS FOR SOLVING THE PROBLEM

In order to resolve the problem described above, a typical configuration of a vehicle airbag device according to the present invention is a vehicle airbag device for a vehicle with a handle in front of a driver seat, wherein
the vehicle airbag device includes an airbag cushion installed in a portion of the vehicle below the handle, and
the airbag cushion includes:
   a main expansion part that expands and deploys between a center part of the handle that is lower than a head of an occupant in a regular orientation gripping the handle and a torso of the occupant, and
   a front expansion part that expands and deploys extending from an upper front side of the main expansion part reaching at least roughly above the handle.

The airbag cushion described above has increased contact surface area with the handle and instrument panel and the like around thereof based on a front expansion part. With this configuration, when the occupant enters the main expansion part, the front expansion part is able to efficiently obtain a reaction force from the handle and surrounding instrument panel and the like; thereby stabilizing the orientation of the main expansion part and enabling efficient absorbing of energy from the occupant. Therefore, the configuration described above enables reducing contact of the occupant with the handle and the like, forward movement of the occupant over the handle, as well as reduction in the motion distance and moving speed of the occupant over the handle. Therefore, with the configuration described above, in a vehicle with a handle, injury values of the occupant can be suitably reduced.

The front expansion part described above may extend to the front of the handle during expansion and deployment. With this configuration, the contact surface area of the front expansion part with the instrument panel and the like increases, enabling an increase in occupant restraint performance of the main expansion part.

The front end of the front expansion part described above may be curved upward during expansion and deployment. With this configuration, if the vehicle comes into contact with another structural element, the front end of the front expansion part enters between the other structural element and the occupant reducing the opportunity for contact between the occupant and the structural element. In addition, as the occupant moves forward, the front end of the front expansion part more readily interferes with the occupant and is therefore able to suitably reduce injury values of the occupant.

The main expansion part may expand and deploy to the inside of the left and right thigh parts of the occupant. With the main expansion part expanding and deploying to the inside of the thigh part of the occupant, the main expansion part pushes the thigh parts apart to the left and right from the inside. Therefore, compared to the case of contacting the thigh part from above, load on the thigh part can be reduced, enabling reducing injury values of the thigh part. In addition, by restraining from the inside of the thigh parts, uneven movement of the body of the occupant to the left and right can be prevented, enabling restraint of the occupant in a stable orientation. By absorbing energy from the lower body as well when the occupant enters the airbag cushion, the injury values when restraining the occupant can be reduced.

The main expansion part may expand and deploy to the inside of the left and right arms of the occupant. With this configuration, the main expansion part does not hinder handle operation by the occupant enabling the occupant to be more safely restrained. In addition, this type of main expansion part prevents uneven movement of the body of the occupant to the left and right, providing restraint of the occupant in a stable orientation, and thereby enabling a reduction in injury values of the occupant.

The width of the main expansion part may gradually broaden in the vehicle width direction toward the rear of the vehicle. With this configuration, a restraining surface of the main expansion part facing the rear of the vehicle is broad in the vehicle width direction, enabling suitable receiving of the body of the occupant. In particular, setting the front width of the main expansion part to a dimension so as to fit inside the left and right thigh parts and left and right arms and setting the rear side wide enables more suitable restraint of the occupant.

A portion of the main expansion part described above below the front expansion part may come into contact with the underside of the handle. With an airbag cushion having this main expansion part, the main expansion part and the front expansion part can engage sandwiching the handle from above and below, enabling more stable receiving of the occupant.

The airbag cushion described above further may have a vent hole provided in a side surface of the expanded and deployed main expansion part in the vehicle width direction. This vent hole configuration enables exhausting gas not against the occupant while preventing blockage due to contact with the occupant.

The vent hole described above may be provided above the handle. With this configuration, the vent hole is positioned above the arms of the occupant gripping the handle so gas can be exhausted, not against the occupant, and the likelihood of blocking of the vent hole by the occupant can be reduced.

The handle described above may be a handlebar. The airbag cushion described above may be suitably implemented for a vehicle with a handlebar as well.

The handle described above may be separate handles. The airbag cushion described above may be suitably implemented for a vehicle with separate handles as well.

### EFFECT OF THE INVENTION

With the present invention, a vehicle airbag device with a simple configuration that is able to reduce injury values of an occupant can be provided.

### BRIEF DESCRIPTION OF THE DRAWINGS

FIG. 1 is a diagram depicting the outline of a vehicle airbag device in an embodiment of the present invention.
FIG. 2 is a diagram depicting an occupant and the airbag cushion of FIG. 1(b) as viewed from various directions.
FIG. 3 is a diagram depicting the process of the airbag cushion of FIG. 2(b) restraining the occupant.
FIG. 4 is a cross-sectional view of the airbag cushion in FIG. 2(a) along B-B.
FIG. 5 is a diagram depicting test results regarding performance of the airbag device of FIG. 2(b).
FIG. 6 is a diagram depicting Modified Example 1 of the airbag cushion of FIG. 2(b).
FIG. 7 is a diagram depicting Modified Example 2 of the airbag cushion of FIG. 2(b).
FIG. 8 is a diagram depicting Modified Example 3 of the airbag cushion of FIG. 2(b).
FIG. 9 is a diagram depicting the airbag cushion of FIG. 8(a) as viewed from above.
FIG. 10 is an example of the airbag device implemented in a vehicle other than the vehicle of FIG. 1.

### DESCRIPTION OF THE PREFERRED EMBODIMENTS

Preferred embodiments according to the present invention will hereinafter be described in detail with reference to the attached drawings. Dimensions, materials, other specific numerical values, and the like indicated in the embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

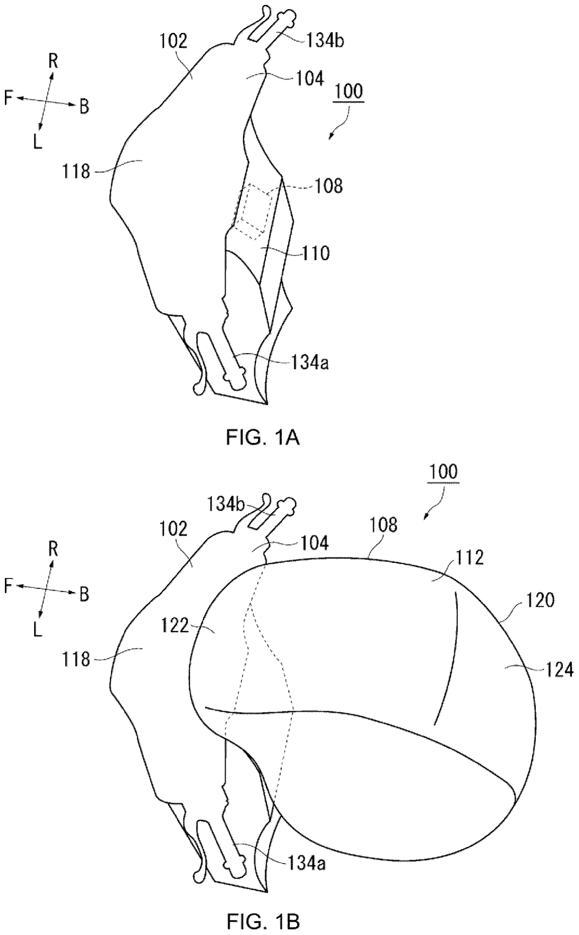

FIG. 1 depicts an overview of the vehicle airbag device (hereinafter, airbag device 100) according to an embodiment of the present invention. FIG. 1(a) is a diagram depicting a state of the airbag device 100 before activation.

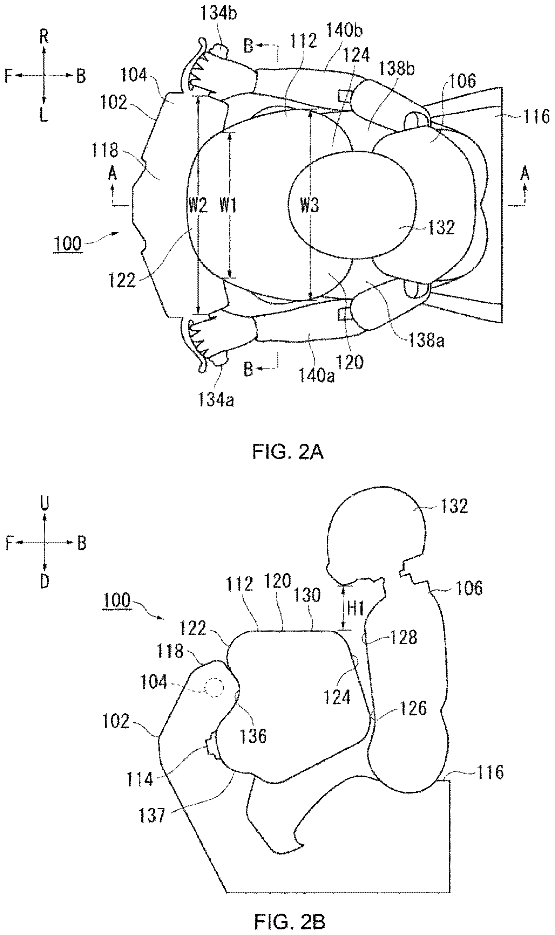

The airbag device 100 is implemented in a vehicle 102 including a handlebar 104 in front of the driver seat (see seat 116 of FIG. 2(a)). The handlebar 104 has grips 134a and 134b at both ends extending to the left and right from the center for the occupant to grip. Examples of vehicles with a handlebar 104 include motorcycles, three wheeled buggies, electric bicycles, electric kickboards, and the like. The present embodiment considers the case for implementing on a motorcycle.

In the present embodiment, with an occupant 106 (see FIG. 2(a) and the like) seated in a normal orientation on the seat 116 and gripping the handles (normally seated orientation), the direction the occupant 106 is facing is forward, the opposite direction to the back of the occupant is backward, the right hand side of the occupant 106 is the right direction and the left hand side of the occupant 106 is the left direction. Furthermore, relative to an occupant 106 seated in a normal orientation, the head direction of the occupant 106 is upward and the foot direction of the occupant 106 is downward. In the drawings used in the description below, as necessary, the front, back, left, right, up, and down directions with reference to the occupant 106 in a regular position described above are indicated by arrows F (Forward), B (Back), L (Left), R (Right), U (up), and D (down).

An airbag module 108 of the airbag device 100 is equipped in a panel part 110 below the handlebar 104 of the vehicle 102. The panel part 110 is a non-turning area, differing from the handlebar 104 and the region thereabove.

The airbag module 108 is composed of an airbag cushion 112 for restraining the occupant 106 (see FIG. 2(a) and the like) and an inflator 114 (see FIG. 2(b)) for supplying gas to the airbag cushion 112.

The airbag cushion 112 is a bag shaped member that can be expanded by gas that expands and deploys in an emergency such as when the vehicle 102 is in a collision and restrains the occupant 106 seated in the seat 116 (see FIG. 2(a) and the like). Prior to activation, the airbag cushion 112 is in a rolled or folded stowed state and is stowed in the panel part 110.

The inflator 114 (see FIG. 2(b)) is a gas generating device that is electrically connected to a vehicle side that activates upon receiving a signal originating from the vehicle side detecting an impact, and that supplies gas to the airbag cushion 112. The inflator 114 includes a plurality of stud bolts (not depicted). The stud bolts are exposed externally from inside the airbag cushion 112 through the base material and are fastened and secured to an inner structure of the panel part 110. With the stud bolts penetrating through the airbag cushion 112 and being fastened to the vehicle side, the airbag cushion 112 is also mounted to the vehicle side.

Examples of currently prevailing inflators include: types which are filled with a gas generating agent and burn the agent to generate gas; types which are filled with compressed gas and supply gas without generating heat; hybrid types which utilize both combustion gas and compressed gas; and the like. Any of these types can be used for the inflator 114.

FIG. 1(b) is a diagram depicting a state after expansion and deployment of the airbag cushion 112 of FIG. 1(a). When the airbag device 100 detects a collision via various sensors and a prescribed Electronic Control Unit (ECU), the airbag device activates the airbag module 108.

The airbag cushion 112 uses gas from the inflator 114 (see FIG 2(b)) to cleave a part of the panel part 110 and expand and deploy externally. The airbag cushion 112 is a bag shaped member and formed by overlapping and sewing or adhering a plurality of base materials configuring a front surface thereof, by spinning and weaving using an OPW (one-piece woven), or the like.

FIG. 2 is a diagram depicting an occupant 106 and the airbag cushion 112 of FIG. 1(b) as viewed from various directions. FIG. 2(a) is a diagram illustrating the airbag cushion 112 in FIG. 1(b) from above. The occupant 106 depicted in FIG. 2(a) is in a so-called normal sitting orientation, being seated in a normal orientation on the seat 116 and gripping the handles.

The occupant 106 depicted in FIG. 2(a) is defined to be a frontal collision test dummy (Hybrid III AM50; human body dummy for frontal collision test set forth in specification [49CFR Part 572 Subpart E and O] of NHTSA [National Highway Traffic Safety Administration]). This dummy has a physique equivalent to the average male in the United States; having an approximate size of 175 cm height, 88 cm sitting height, and 78 kg weight.

The airbag cushion 112 expands and deploys between near the center of the handlebar 104 and the upper body of the occupant 106 to restrain the occupant 106. This prevents the body of the occupant 106 from colliding with the instrument panel 118 of the vehicle 102 and the occupant 106 from moving forward over the instrument panel 118.

FIG. 2(b) is a schematic cross section of the airbag device 100 of FIG. 2(a) along A-A. The expansion part of the airbag cushion 112 is broadly divided into a main expansion part 120 and a front expansion part 122. Note that the shape of the airbag cushion 112 described below with reference to FIG. 2(b) is just after the airbag cushion 112 expands and deploys and before coming into contact with the occupant 106.

The main expansion part 120 constitutes the main portion of the airbag cushion 112, and expands and deploys in the space including between the handlebar 104 and instrument panel 118 of the vehicle 102 and the occupant 106. Of the main expansion part 120, a restraining surface 124 facing the rear of the vehicle is inclined somewhat forward in the upward direction and is a surface for restraining from an abdomen 126 to a chest 128 of the occupant 106.

An upper surface 130 of the main expansion part 120 is configured to deploy at a position separated roughly a distance H1 below a head 132 of the occupant 106 in a normal sitting orientation. Impacts in particular to the jaw area of the head 132 are known to readily raise injury values. The main expansion part 120 of the present embodiment achieves reduction in injury values by avoiding contact near the jaw of the occupant 106.

The front expansion part 122 expands and deploys extending from an upper front side of the main expansion part 120, reaching at least roughly above the handlebar 104. The front expansion part 122 with this configuration protects the occupant 106 from contact with a center part of the handlebar 104 or the instrument panel 118. In addition, if the center part of the handlebar 104 is concave, the front expansion part 122 fits into the center part of the handlebar 104, stabilizing the orientation of the main expansion part 120 and thereby increasing the restraint performance of the occupant 106 by the main expansion part 120.

FIG. 2(a) is again referred to. The width W1 of the front expansion part 122 is set to a dimension that fits within the range W2 to the inside in the vehicle width direction of the grips 134a and 134b of the handlebar 104 gripped by the occupant 106. Therefore, the front expansion part 122 covers the instrument panel 118 and the center part of the handlebar 104 while not interfering with the grips and does not move around significantly even if the handlebar 104 is turned. Therefore, when the occupant 106 enters the airbag cushion 112, the occupant 106 can be received without changes to the contact position.

A portion (front lower part 137) of the main expansion part 120 of the airbag cushion 112 in FIG. 2(b) that is lower than the front expansion part 122 protrudes to the front of the vehicle so as to basically come into contact with the underside of the handlebar 104. Therefore, a recessed part 136 is formed between the front expansion part 122 and the front lower part 137 of the main expansion part 120.

The recessed part 136 is an area that is depressed to the rear enabling engaging with the handlebar 104 from the rear as well as from above and below. Due to the recessed part 136 of the airbag cushion 112 engaging with the handlebar 104 as well as with the area near the instruments at the center of the handlebar 104 and the like, the orientation of this airbag cushion 112 is even better stabilized; and thereby restraint performance is improved.

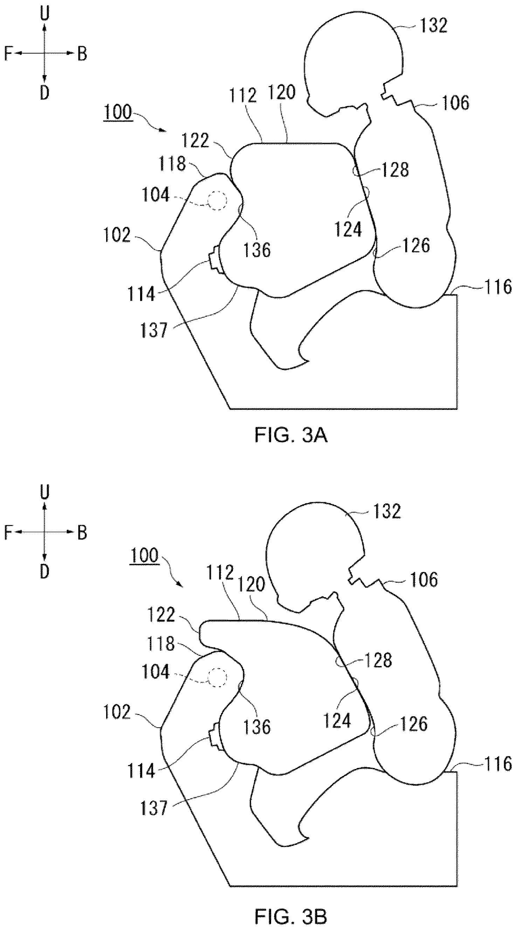

FIG. 3 is a diagram that depicts the process of the airbag cushion 112 of FIG. 2(b) restraining the occupant 106. FIG. 3(a) is a diagram depicting the manner in which the occupant 106 comes into contact with the airbag cushion 112. As described above, by means of a restraining surface 124 of the main expansion part 120, the airbag cushion 112 restrains mainly from the abdomen 126 to the chest 128 of the occupant 106.

FIG. 3(b) is a diagram depicting the occupant 106 of FIG. 3(a) entering further into the airbag cushion 112. When a load from the occupant 106 is applied to the main expansion part 120, the front expansion part 122 and recessed part 136 deform so as to wrap around the instrument panel 118 and the center part of the handlebar 104. Thereby contact area between the airbag cushion 112 and near the handlebar 104 increases which stabilizes the orientation of the airbag cushion 112, enabling full restraint of the occupant 106.

With the airbag cushion 112, when the occupant 106 enters the main expansion part 120, the front expansion part 122 can efficiently obtain a reaction force from the handlebar 104 as well as the instrument panel 118 and the like; thereby stabilizing the orientation of the main expansion part 120. For example, rotating where the main expansion part 120 rises up when the occupant 106 enters therein can be prevented. This enables the airbag cushion 112 to efficiently absorb the energy from the occupant 106.

In addition, the front expansion part 122 thereby deforms, extending to the front when the load from the occupant 106 is applied to the main expansion part 120. In this manner, the front expansion part 122 covers the handlebar 104, the instrument panel 118, as well as instruments and the like and fully protects the body of the occupant 106 from contacting these structural elements.

With the airbag cushion 112, contact of the occupant 106 with the handlebar 104 and the like and movement of the occupant 106 over the handlebar 104 can be prevented. Furthermore, this type of airbag cushion 112 will interfere with occupant 106 attempting to cross over the handlebar 104, reducing movement amount and moving speed of the occupant 106. Thereby enabling, for example, lowering speed of the occupant 106 coming into contact with other structural elements. Therefore, with the airbag device 100 of the present embodiment, injury values of the occupant 106 can be suitably reduced for a vehicle 102 with a handlebar 104.

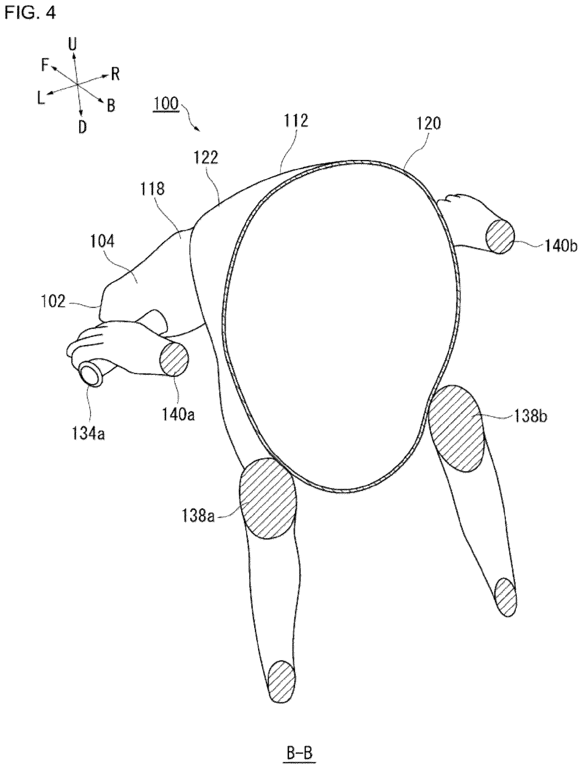

FIG. 4 is a cross-sectional view of the airbag cushion 112 in FIG. 2(a) along B-B. Regarding an occupant 106 in a regular seated orientation, the main expansion part 120 has dimensions set to enable expanding and deploying to the inside of left and right thigh parts 138a and 138b. With this configuration, the main expansion part 120 expands and deploys to the inside of the thigh parts 138a and 138b of the occupant 106 and therefore, the main expansion part 120 contacts the thigh parts 138a and 138b in a manner so as to spread them to the left and right from the inside. Therefore, compared to expanding and deploying above the thigh parts 138a and 138b, the likelihood of pressing on the thigh parts 138a and 138b is reduced, enabling a reduction in injury values of the thigh parts 138a and 138b.

By restraining the thigh parts 138a and 138b from the inside, the main expansion part 120 prevents uneven movement of the body of the occupant 106 to the left and right, thereby providing restraint of the occupant 106 in a stable orientation. By absorbing energy from the lower body as well when the occupant 106 enters the airbag cushion 112, the injury values when restraining the occupant 106 can be reduced.

In addition, with regards to an occupant 106 in a normal sitting orientation, the main expansion part 120 is set with dimensions to expand and deploy inside the left and right arms 140a and 140b gripping the handlebar 104. With this configuration, the main expansion part 120 does not hinder handle operation by the occupant 106 enabling the occupant 106 to be more safely restrained. In addition, this type of main expansion part 120 prevents uneven movement of the body of the occupant 106 to the left and right, providing restraint of the occupant 106 in a stable orientation, and thereby enabling a reduction in injury values of the occupant 106.

Here, refer again to FIG. 2(a). The width of the main expansion part 120 gradually broadens in the vehicle width direction toward the rear of the vehicle. For example, a width W3 of a portion on the side of the main expansion part 120 toward the rear of the vehicle is set wider than the width W1 near the front expansion part 122 (W1 > W3). Therefore, the restraining surface 124 of the main expansion part 120 toward the rear of the vehicle is formed wide in the vehicle width direction and this enables suitable receiving of the body of the occupant 106. In this manner the width W1 on the front side of the main expansion part 120 is set to a dimension so as to fit inside the left and right thigh parts 138a and 138b and arms 140a and 140b of the occupant while the width W3 at the rear is widened, and therefore is better able to suitably restrain the occupant 106.

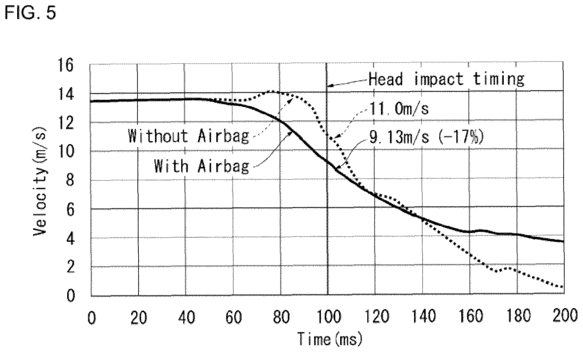

FIG. 5 is a diagram depicting test results regarding performance of the airbag device 100 of FIG. 2(b). A collision test was analyzed by a computer for a vehicle 102 with the airbag device 100 installed and for a vehicle where the airbag device 100 was not installed and the moving speed of the head 132 of the occupant 106 was measured. The vertical axis shows velocity (m/s) and the horizontal axis shows time (ms). As a result of the analysis, the moving speed of the head 132 for the vehicle 102 with the airbag device 100 installed was reduced 17% compared to the vehicle without the airbag device installed at 100 ms when the head 132 collided with the instrument panel 118 of each vehicle (see FIG. 2(b)).

As described above, the airbag device 100 of the present embodiment efficiently restrains the occupant 106 on a vehicle 102 with the handlebar 104 and in particular reduces the moving speed of the head 132 of the occupant 106, enabling a favorable reduction in injury values of the occupant 106.

### Modified Example

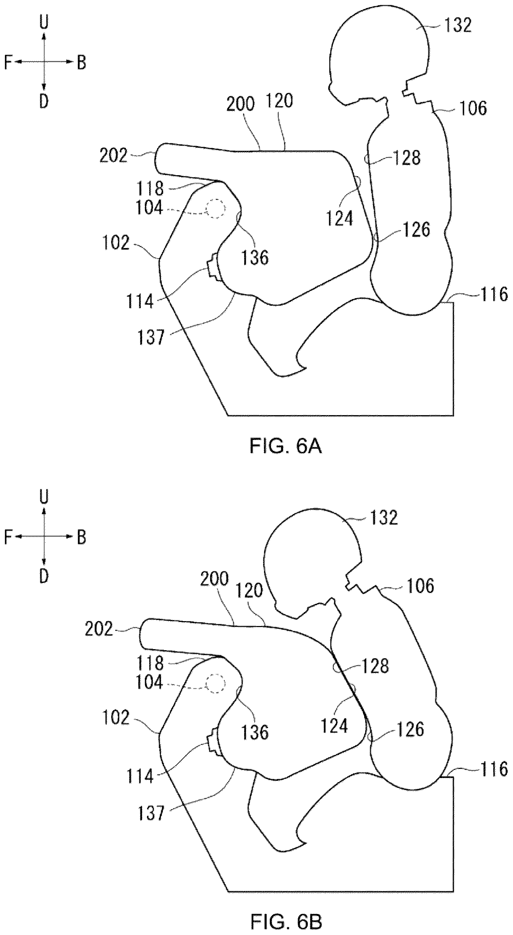

FIG. 6 is a diagram depicting Modified Example 1 of the airbag cushion 112 in FIG. 2(b) (airbag cushion 200). In FIGS. 6 and thereafter, the same symbols are given to the same constituent elements as those described above, whereby description of the aforementioned constituent elements is omitted. In the following description, components having the same name as a component already described are assumed to have the same function unless otherwise specified, even if marked with a different sign.

FIG. 6(a) is a diagram depicting the airbag cushion 200 corresponding to FIG. 2(b). The dimensions of a front expansion part 202 provided on the airbag cushion 200 are extended to enable extending to the front of the handlebar 104 during expansion and deployment. The contact surface area of the front expansion part 202 with the center part of the handlebar 104 of the vehicle 102 and the instrument panel 118 is increased to further stabilize the orientation of the main expansion part 120 and raise the restraint performance of the occupant 106 by the main expansion part 120.

FIG. 6(b) is a diagram depicting the occupant 106 of FIG. 6(a) entering further into the airbag cushion 200. The front expansion part 202 thereby deforms, extending to the front, when the load from the occupant 106 is applied to the main expansion part 120. In this manner, the front expansion part 202 covers the handlebar 104, the instrument panel 118, as well as instruments and the like and is able to fully protect the body of the occupant 106 from contacting these structural elements. Therefore, this airbag cushion 200 enables suitable reduction in injury values of the occupant 106.

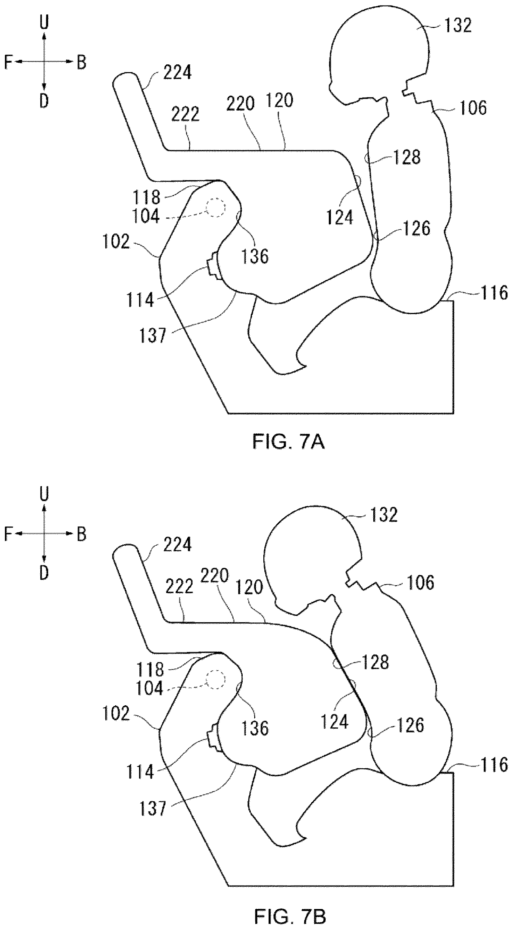

FIG. 7 is a diagram depicting Modified Example 2 of the airbag cushion 112 in FIG. 2(b) (airbag cushion 220). FIG. 7(a) is a diagram depicting the airbag cushion 220 corresponding to FIG. 2(b). The front expansion part 222 provided on the airbag cushion 220 extends to the front of the handlebar 104 during expansion and deployment and furthermore, a front end part 224 on a front end side is curved upwards.

FIG. 7(b) is a diagram depicting the occupant 106 of FIG. 7(a) entering further into the airbag cushion 220. The front expansion part 222 thereby deforms, extending to the front, when the load from the occupant 106 is applied to the main expansion part 120. Here, the front expansion part 222 is configured to broadly cover the handlebar 104 and the like and thoroughly prevent contact of the body of the occupant 106 with these structural elements and the front end part 224 interferes with forward movement of the occupant 106.

The airbag cushion 220 interferes with the occupant 106 passing over the handlebar 104 by means of the front end part 224 of the front expansion part 222, and enables reducing the movement amount and moving speed of the occupant 106. In addition, if the vehicle 102 comes into contact with another structure, the front end part 224 enters between the other structure and the occupant 106, reducing the likelihood of the occupant 106 coming into contact with the other structure. Therefore, the airbag cushion 220 is also able to suitably reduce injury values of the occupant 106.

The front expansion parts 122, 202, and 222 in the various aspects described above need not be configured to expand from the start of expansion and deployment of each airbag cushion. For example, the front expansion parts 122, 202, and 222 may be configured so as to be folded inside the main expansion part 120 or may be retained in a contracted state by breakable temporary sewing. With this configuration as well, the internal pressure of the airbag cushion rises when the occupant 106 enters the main expansion part 120, after which the front expansion parts 122, 202, and 222 are released from the folding or temporary sewing, and then expand and deploy. In addition, an expansion part that expands and deploys extending from the main expansion part 120 to the left, right, or upwards may be provided as an expansion part similar to the front expansion parts 122, 202, and 222.

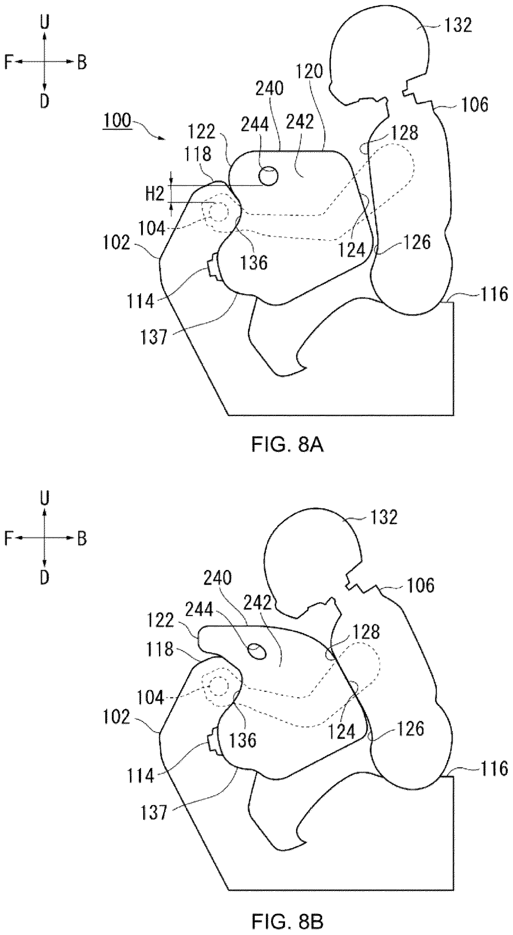

FIG. 8 is a diagram depicting Modified Example 3 of the airbag cushion 112 in FIG. 2(b) (airbag cushion 240). FIG. 7(a) is a diagram depicting the airbag cushion 240 corresponding to FIG. 2(b). The airbag cushion 240 is provided with a vent hole 244 on a side surface 242 of the main expansion part 120 in the vehicle width direction for exhausting gas.

The vent hole 244 is provided on the side surface 242 of the main expansion part 120 at a location that is positioned at a height H2 above the handlebar 104 during expansion and deployment. With this configuration, the vent hole 244 is positioned above the arm 140a of the occupant 106 in a normal sitting orientation and gripping the handlebar 104.

FIG. 8(b) is a diagram depicting the occupant 106 of FIG. 8(a) entering further into the airbag cushion 240. The vent hole 244 is positioned above the handlebar 104 and the arm 140a, which enables exhausting of gas that does not come into contact with the occupant 106. In addition, providing the vent hole 244 in this position reduces the likelihood of being blocked by the occupant 106.

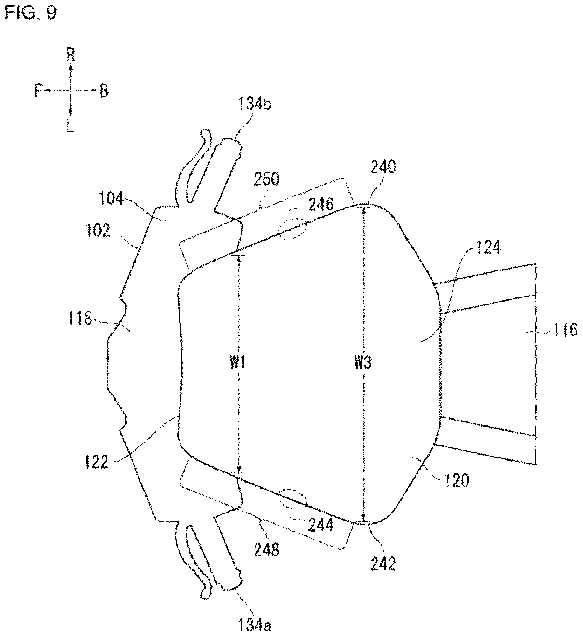

FIG. 9 is a diagram depicting the airbag cushion 240 of FIG. 8(a) as viewed from above. The airbag cushion 240 expands and deploys with a shape that gradually widens towards the rear of the vehicle. For example, regarding the main expansion part 120, as described with reference to FIG. 2(a), the width W3 of the portion toward the rear of the vehicle is set wider than the width W1 close to the front expansion part 122 for the main expansion part 120 (W1 > W3), and thereby, the body of the occupant 106 can be received with a wider restraining surface 124. Here, the front of a side surface 240 of the main expansion part 120 has inclined regions 248 and 250 formed slightly facing forward.

Of the side surface 242, vent holes 244 and 246 are provided on the inclined regions 248 and 250. Providing the vent holes 244 and 246 in the inclined regions 248 and 250 enables exhausting gas towards the front of the vehicle, opposite the sitting position of the occupant 106.

The configuration described above prevents gas exhausted from the vent holes 244 and 246 from coming into contact with the occupant 106 and thereby enables implementing a safer airbag cushion 240.

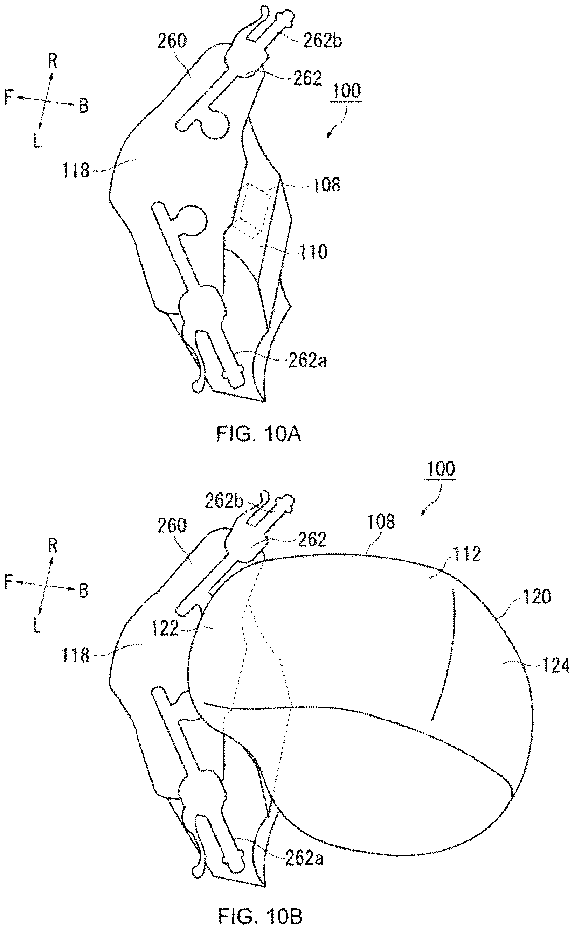

FIG. 10 is an example of the airbag device 100 implemented in a vehicle 260 other than the vehicle 102 of FIG. 1. FIG. 10(a) is a diagram depicting the vehicle 260 corresponding to FIG. 1(a). The airbag device 100 can also be implemented on a vehicle with separate handles 262.

The separate handles 262 differ from the handlebar 104 where left and right grips 134a and 134b of FIG. 1(a) are connected in the center, having a configuration where left and right grips 262a and 262b are independent. Examples of vehicle 260 include an electric bicycle in addition to a motorcycle or three wheel buggy car.

FIG. 10(b) is a diagram depicting a state after expansion and deployment of the airbag cushion 112 of FIG. 10(a). In the case of being implemented on the vehicle 260 as well, the airbag cushion 112 expands and deploys between near the center of the grips 262a and 262b of the separate handles 262 and the upper torso of the occupant 106 to restrain the occupant 106.

The main expansion part 120 expands and deploys in the space between a portion including the separate handles 262 and instrument panel 118 of the vehicle 260 and the occupant 106. The front expansion part 122 expands and deploys extending from an upper front side of the main expansion part 120, reaching at least roughly above the separate handles 262.

The width W1 of the front expansion part 122 (see FIG. 2(a)) can be set to a dimension that fits in the range inside the grips 262a and 262b in the vehicle width direction. In addition, the recessed part 136 of FIG. 2(b) can be configured to enable engaging with the separate handles 262 from the rear as well as from above and below.

For the airbag device 100, similar to the case of being implemented on the vehicle 102 of FIG. 3(b), in the case of being implemented on the vehicle 260 as well, when a load is applied from the occupant 106 to the expansion part 120 of the airbag cushion 112, the front expansion part 122 and recessed part 136 deform so as to wrap around near the center part of the separate handles 262 and instrument panel 118 and thereby contact surface near the separate handles 262 increases.

In this manner, in the case where the airbag device 100 is implemented on the vehicle 260 having separate handles 262, the orientation of the airbag cushion 112 is stabilized enabling full restraint of the occupant 106 and suitable reduction in injury values of the occupant 106.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, it is obvious that a person of ordinary skill in the art can conceive various changed examples or modified examples within the scope described in the scope of the claims, which is understood to naturally belong to the technical scope of the present invention.

### INDUSTRIAL APPLICABILITY

The present invention can be used for a vehicle airbag device provided on a vehicle having a handlebar in front of a driver seat.

### EXPLANATION OF CODES

100. Airbag device, 102. Vehicle, 104. Handlebar, 106. Occupant, 108. Airbag module, 110. Panel part, 112. Airbag cushion, 114. Inflator, 116. Seat, 118. Instrument panel, 120. Main expansion part, 122. Front expansion part, 124. Restraining surface, 126. Abdomen, 128k. Chest part, 130. Upper surface, 132. Head, 134a, 134b. Grip, 136. Recessed part, 137. Front lower part, 138a, 138b. Thigh part, 140a, 140b. Arm, 200. Airbag cushion, 202. Front expansion part, 220. Airbag cushion, 222. Front expansion part, 224. Front end part, 240. Airbag cushion, 242. Side surface, 244, 246. Vent hole, 248, 250. Inclined region, W1, W3. Width, W2. Range, 260. Vehicle, 262. Separate handles, 262a, 262b. Grip.

## Claims

1. A vehicle airbag device for a vehicle with a handle in front of a driver seat, wherein
the vehicle airbag device includes an airbag cushion installed in a portion of the vehicle below the handle, and
the airbag cushion includes:
a main expansion part that expands and deploys between a center part of the handle that is lower than a head of an occupant in a regular orientation gripping the handle and a torso of the occupant, and
a front expansion part that expands and deploys extending from an upper front side of the main expansion part reaching at least roughly above the handle.

2. The vehicle airbag device according to claim 1, wherein the front expansion part extends to the front of the handle during expansion and deployment.

3. The vehicle airbag device according to claim 1 or 2, wherein a front end of the front expansion part curves upward during expansion and deployment.

4. The vehicle airbag device according to any one of claims 1 to 3, wherein the main expansion part expands and deploys inside left and right thigh parts of the occupant.

5. The vehicle airbag device according to any one of claims 1 to 4, wherein the main expansion part expands and deploys inside left and right arms of the occupant.

6. The vehicle airbag device according to any one of claims 1 to 5, wherein the width of the main expansion part gradually widens towards the rear of the vehicle.

7. The vehicle airbag device according to any one of claims 1 to 6, wherein the portion of the main expansion part below the front expansion part comes into contact with an underside of the handle.

8. The vehicle airbag device according to any one of claims 1 to 7, wherein the airbag cushion further includes vent holes for discharging gas provided in the vehicle width direction on a side surface of the expanded and deployed main expansion part.

9. The vehicle airbag device according to claim 8, wherein the vent hole is provided above the handle.

10. The vehicle airbag device according to anyone of claims 1 to 9, wherein the handle is a handlebar.

11. The vehicle airbag device according to anyone of claims 1 to 9, wherein the handle is separate handles.
